# EUROPEAN PATENT APPLICATION

(11) **EP 4 443 786 A1**
(43) Date of publication of application: **09.10.2024**
(21) Application number: 24165398.9
(22) Date of filing: 22.03.2024
(51) Int. Cl.: H04L 1/00, H04B 7/06

(54) **RECONSTRUCTION OF CHANNEL STATE INFORMATION USING THE COMBINATION OF AT LEAST TWO DECODERS**

(30) Priority: 05.04.2023 FI 20235392
(71) Applicant: Nokia Solutions and Networks Oy, 02610 Espoo (FI)
(72) Inventor: BARBU, Oana-Elena, Aalborg (DK); REZAIE, Sajad, Aalborg (DK)
(74) Representative: Nokia EPO representatives

(57) **Abstract**

A method of reconstructing channel state information, comprising: decoding encoded channel state information using at least two different decoders, combining decoded channel state information obtained by the decoding using the at least two different decoders to obtain combined channel state information.

## Description

### Field of the Disclosure

The disclosure relates to a method of reconstructing channel state information. The disclosure further relates to an apparatus comprising at least one processor.

### Background

Channel state information, CSI, is used for precoding in massive multiple-input multiple-output, MIMO communications with frequency division duplex, FDD, schemes. A base station, BS, may use the CSI to obtain higher signal-to-noise-ratio, SNR, and channel capacity. Channel state information may be encoded, e.g. compressed, e.g. for transmission to a base station.

### Summary

Various embodiments of the disclosure are set out by the independent claims.

Some embodiments relate to a method of reconstructing channel state information, comprising: decoding encoded channel state information using at least two different decoders, combining decoded channel state information obtained by the decoding using the at least two different decoders to obtain combined channel state information. In some embodiments, this provides an increased flexibility for reconstructing the channel state information.

In some embodiments, an apparatus may be provided to perform the method according to the embodiments. In some embodiments, the apparatus may e.g. be an apparatus for a wireless communications network, e.g. according to the 5G and/or 5G Advanced and/or 6G type or of other types.

In some embodiments, the apparatus and/or its functionality may e.g. be provided for a network device, e.g. base station, e.g. gNB, e.g. for a cellular communications network. In some embodiments, the apparatus and/or its functionality may e.g. be integrated in the network device.

In some embodiments, the at least two different decoders are configured to decode encoded channel state information associated with at least one of a) a different channel model and/or b) a different channel type, e.g. with respect to another decoder.

In some embodiments, the at least two different decoders are trainable, e.g. using at least one artificial intelligence and/or machine learning based technique.

In some embodiments, at least one of the at least two decoders, for example at last some or all of the at least two decoders, is/are trained based on, e.g. associated with, a particular channel model and/or channel type, which in some embodiments e.g. enables to provide different, specialized decoders which are e.g. optimized for different scenarios that may e.g. be characterized by at least one of different channel models and/or different channel types. As an example, in some embodiments, the different scenarios may comprise at least one of: a) indoor environment, b) outdoor environment.

In some embodiments, the method comprises receiving the encoded channel state information, e.g. from a further device such as a terminal device, e.g. user equipment, UE. In some embodiments, the encoded channel state information may e.g. be received by a gNB from a terminal device, and an apparatus according to the embodiments may e.g. process at least one of the encoded channel state information and/or information derived based on the encoded channel state information, e.g. using a method according to the embodiments.

In some embodiments, the method comprises using the combined channel state information. As an example, in some embodiments, the gNB may use the combined channel state information for transmissions to the terminal device.

In some embodiments, the method comprises: determining the at least two different decoders based on the encoded channel state information and based on at least one of: a) a respective channel model associated with at least one decoder of the at least two different decoders, b) a respective channel type associated with at least one decoder of the at least two different decoders. In some embodiments, this enables to select suitable, e.g. most suitable, decoders for the decoding of the encoded channel state information from the plurality of decoders.

In some embodiments, the method comprises: determining a similarity between a code associated with the encoded channel state information and a respective code associated with at least one of the at least two different decoders, determining the at least two different decoders based on the determined similarity.

In some embodiments, the method comprises: providing a set of keys, wherein each key characterizes a code of a channel state information measurement associated with a specific scenario (e.g., indoor, outdoor, and the like), comparing the code associated with the encoded channel state information with the respective codes of the keys to determine J many keys, J >= 1, the respective codes of which are most similar to the code associated with the encoded channel state information, determining J many decoders of the at least two different decoders based on the J many keys.

In some embodiments, the determination of the J many keys may e.g. use at least one of: a) a K nearest neighbors, KNN, technique, b) at least one other clustering algorithm.

In other words, KNN or some other clustering algorithm may be used to find the J many keys. In some embodiments, e.g. for selecting the J many keys, a distance/similarity metric, e.g. Euclidian distance or cosine distance may be used.

In some embodiments, the method comprises: decoding the encoded channel state information using the J many decoders thus obtaining J many variants of decoded channel state information, combining the J many variants of decoded channel state information.

In some embodiments, the decoding of the encoded channel state information using the J many decoders is performed simultaneously (e.g., in parallel) or at least in a temporally overlapping fashion.

In some embodiments, the decoding of the encoded channel state information using the J many decoders is performed sequentially.

In some embodiments, the comparing of the code associated with the encoded channel state information with the respective codes of the keys comprises the determining of the J many keys the respective codes of which are most similar to the code associated with the encoded channel state information and determining, for each of the J many keys, a respective similarity metric characterizing a similarity between the code associated with the encoded channel state information and a code of the respective key of the J many keys.

In some embodiments, the method comprises combining the J many variants of decoded channel state information as weighted average of the the J many variants using the respective similarity metric as a respective weight.

In some embodiments, the method comprises: providing a dataset comprising a plurality of samples, each sample characterizing an unencoded channel state information and a respective encoded channel state information, determining encoding keys based on the dataset, assigning a respective decoder of the at least two different decoders to the encoding keys.

In some embodiments, as an example, a UE may collect a dataset, e.g. training data set, including e.g. N many samples, where each sample includes an original (e.g., un-compressed) channel state information and a corresponding encoding, e.g. a compressed version of the channel state information.

In some embodiments, the UE may obtain the training dataset D by mixing samples from several environments/scenarios (e.g., indoor, outdoor, and the like).

In some embodiments, the UE may train a trainable encoder, e.g. using techniques based on artificial intelligence and/or machine learning, to encode, e.g. compress, channel state information.

In some embodiments, the whole training dataset or a part of the training dataset of the UE may be provided to a network device, e.g. gNB, and/or to a vendor of the gNB, e.g. as the dataset mentioned above. This enables the gNB to use the training dataset of the UE, e.g. for performing aspects of the method according to the embodiments.

In some embodiments, the method comprises training at least one of the at least two different decoders based on the plurality of samples of the dataset, e.g. training dataset.

In some embodiments, the method comprises: extracting encoding keys based on the shared training dataset, assigning a specific decoder of the at least two decoders to each encoding key and using the samples in the shared training dataset to train the at least two decoders.

In some embodiments, for each sample in the shared training dataset, the J many most similar encoding keys are identified, and the corresponding paired decoders are used in forward and backward propagations for the training. In some embodiments, in this approach, each decoder is trained based on the samples that are in a neighborhood of the paired encoding key.

Some embodiments relate to an apparatus comprising at least one processor, and at least one memory storing instructions that, when executed by the at least one processor, cause the apparatus to at least decode encoded channel state information using at least two different decoders and to combine decoded channel state information obtained by the decoding using the at least two different decoders to obtain combined channel state information.

In some embodiments, the apparatus may e.g. be an apparatus for a wireless communications network, e.g. according to the 5G and/or 5G Advanced and/or 6G type or of other types.

In some embodiments, the apparatus and/or its functionality may e.g. be provided for a network device, e.g. base station, e.g. gNB, e.g. for a cellular communications network. In some embodiments, the apparatus and/or its functionality may e.g. be integrated in the network device.

In some embodiments, the at least one memory stores instructions that, when executed by the at least one processor, cause the apparatus to perform the method according to the embodiments.

Some embodiments relate to an apparatus comprising means for decoding encoded channel state information using at least two different decoders and for combining decoded channel state information obtained by the decoding using the at least two different decoders to obtain combined channel state information.

In some embodiments, the apparatus comprises means for performing the method according to the embodiments.

In some embodiments, the means for decoding and/or the means for combining and/or the means for performing the method according to the embodiments may comprise at least one processor, and at least one memory storing instructions that, when executed by the at least one processor, cause the apparatus to perform the respective aspects, e.g. methods.

Some embodiments relate to an apparatus comprising at least decoding circuitry configured to decode encoded channel state information using at least two different decoders and combining circuitry configured to combine decoded channel state information obtained by the decoding using the at least two different decoders to obtain combined channel state information.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory/memories that work together to cause an apparatus to perform various functions) and (iii) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a network device, e.g. cellular network device, or other computing or network device.

Some embodiments relate to a network device, e.g. a base station, e.g. gNB, comprising at least one apparatus according to the embodiments.

Some embodiments relate to a communication system, e.g. a cellular communication system, comprising at least one of: a) an apparatus according to the embodiments, b) a network device according to the embodiments.

Some embodiments relate to a computer program or computer program product comprising instructions which, when the program is executed by a computer, cause the computer to carry out the method according to the embodiments.

Further exemplary embodiments relate to a data carrier signal carrying and/or characterizing the instructions to perform at least some aspects of the embodiments. In some embodiments, the instructions may e.g. be provided in the form of at least one computer program.

### Brief Description of the Figures

- Fig. 1: schematically depicts a simplified block diagram according to some embodiments,
- Fig. 2: schematically depicts a simplified flow chart according to some embodiments,
- Fig. 3: schematically depicts a simplified flow chart according to some embodiments,
- Fig. 4: schematically depicts a simplified flow chart according to some embodiments,
- Fig. 5: schematically depicts a simplified flow chart according to some embodiments,
- Fig. 6: schematically depicts a simplified block diagram according to some embodiments,
- Fig. 7: schematically depicts a simplified flow-chart according to some embodiments,
- Fig. 8: schematically depicts a simplified flow-chart according to some embodiments,
- Fig. 9: schematically depicts a simplified flow-chart according to some embodiments,
- Fig. 10: schematically depicts a simplified flow-chart according to some embodiments,
- Fig. 11A: schematically depicts a simplified block diagram according to some embodiments,
- Fig. 11B: schematically depicts a simplified block diagram according to some embodiments,
- Fig. 11C: schematically depicts a simplified block diagram according to some embodiments,
- Fig. 12: schematically depicts a simplified block diagram according to some embodiments,
- Fig. 13: schematically depicts a simplified block diagram according to some embodiments,
- Fig. 14: schematically depicts a simplified block diagram according to some embodiments,
- Fig. 15: schematically depicts a simplified block diagram according to some embodiments.

### Description of the Embodiments

Some embodiments relate to a method of reconstructing channel state information, CSI. CSI may be used for precoding in massive multiple-input multiple-output, MIMO communications, for example with frequency division duplex, FDD, schemes. A base station may use the CSI to obtain higher signal-to-noise-ratio, SNR, and/or channel capacity. Channel state information may be encoded, e.g. compressed, e.g. for transmission to a base station.

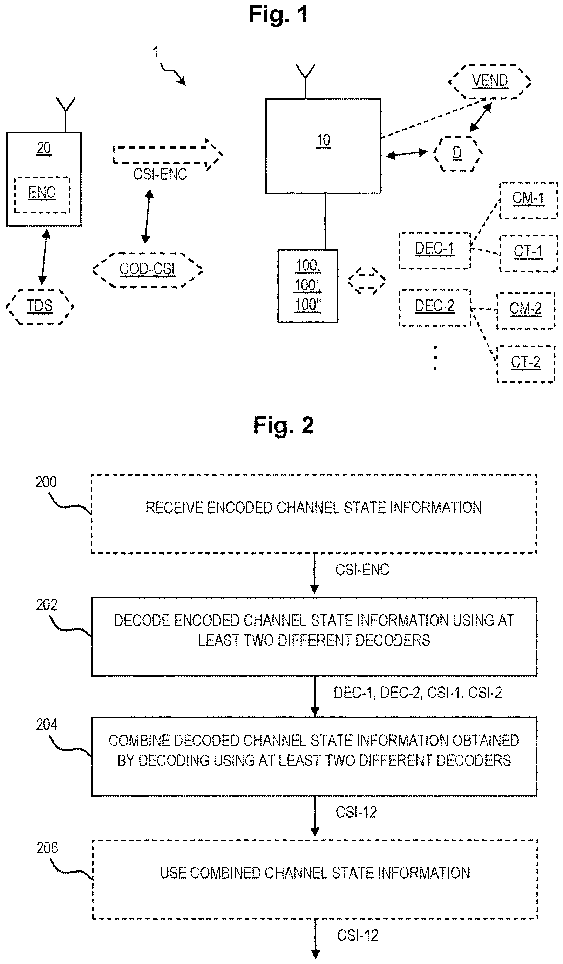

Some embodiments, see, for example, Fig. 1, 2, relate to a method of reconstructing channel state information, CSI, comprising: decoding 202 (Fig. 2) encoded channel state information CSI-ENC using at least two different decoders DEC-1, DEC-2, ..., combining 204 decoded channel state information CSI-1, CSI-2 obtained by the decoding 202 using the at least two different decoders DEC-1, DEC-2, ... to obtain combined channel state information CSI-12. In some embodiments, this provides an increased flexibility for reconstructing the channel state information.

In some embodiments, Fig. 1, an apparatus 100, 100', 100'' may be provided to perform the method according to the embodiments, e.g. comprising blocks 202, 204 of Fig. 2. In some embodiments, Fig. 1, the apparatus 100, 100', 100'' may e.g. be an apparatus for a wireless communications network or communications system 1, e.g. according to the 5G and/or 5G Advanced and/or 6G type or of other types.

In some embodiments, the apparatus 100, 100', 100'' and/or its functionality may e.g. be provided for a network device 10, e.g. base station, e.g. gNB, e.g. for a cellular communications network. In some embodiments, the apparatus 100, 100', 100'' and/or its functionality may e.g. be integrated in the network device 10 (not shown).

In some embodiments, Fig. 1, the at least two different decoders DEC-1, DEC-2, ... are configured to decode encoded channel state information associated with at least one of a) a different channel model CM-1, CM-2 and/or b) a different channel type CT-1, CT-2, e.g. with respect to another decoder.

In some embodiments, the at least two different decoders DEC-1, DEC-2, ... are trainable, e.g. using at least one artificial intelligence and/or machine learning based technique.

In some embodiments, Fig. 1, at least one of the at least two decoders DEC-1, DEC-2, ..., for example at last some or all of the at least two decoders, is/are trained based on, e.g. associated with, a particular channel model and/or channel type, which in some embodiments e.g. enables to provide different, specialized decoders which are e.g. optimized for different scenarios that may e.g. be characterized by at least one of different channel models and/or different channel types. As an example, in some embodiments, the different scenarios may comprise at least one of: a) indoor environment, b) outdoor environment. As an example, in some embodiments, the first decoder DEC-1 may be trained, e.g. optimized, for a communication scenario involving an indoor environment, whereas the second decoder DEC-2 may be trained, e.g. optimized, for a different communication scenario, e.g. involving an outdoor environment.

In some embodiments, Fig. 2, the method comprises receiving 200 the encoded channel state information CSI-ENC, e.g. from a further device 20 such as a terminal device, e.g. user equipment, UE.

In some embodiments, the encoded channel state information CSI-ENC may e.g. be received by a gNB 10 from a terminal device 20, and an apparatus 100, 100', 100'' according to the embodiments may e.g. process at least one of the encoded channel state information and/or information derived based on the encoded channel state information, e.g. using a method according to the embodiments.

In some embodiments, Fig. 2, the method comprises using 206 the combined channel state information. As an example, in some embodiments, the gNB 10 (Fig. 1) may use the combined channel state information CSI-12 for transmissions to the terminal device 20.

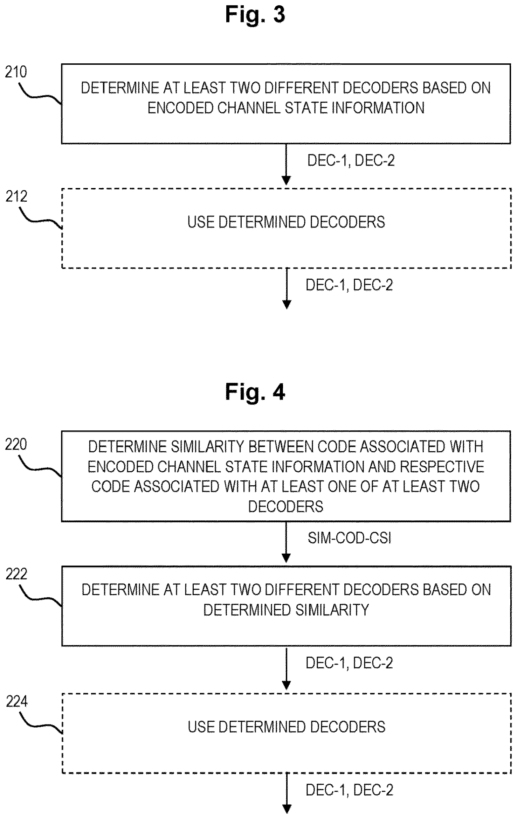

In some embodiments, Fig. 3, the method comprises: determining 210 the at least two different decoders DEC-1, DEC-2, ... based on the encoded channel state information CSI-ENC and based on at least one of: a) a respective channel model associated with at least one decoder of the at least two different decoders, b) a respective channel type associated with at least one decoder of the at least two different decoders. In some embodiments, this enables to select suitable, e.g. most suitable, decoders DEC-1, DEC-2 for the decoding of the encoded channel state information from the plurality of decoders. The optional block 212 of Fig. 2 symbolizes using the so determined decoders DEC-1, DEC-2, e.g. for the decoding, see, for example, block 202 of Fig. 2.

In some embodiments, Fig. 4, the method comprises: determining 220 a similarity SIM-COD-CSI between a code COD-CSI (Fig. 1) associated with the encoded channel state information CSI-ENC and a respective code associated with at least one of the at least two different decoders DEC-1, DEC-2, ..., determining 222 the at least two different decoders based on the determined similarity. The optional block 224 of Fig. 4 symbolizes using the so determined decoders DEC-1, DEC-2, e.g. for the decoding, see, for example, block 202 of Fig. 2.

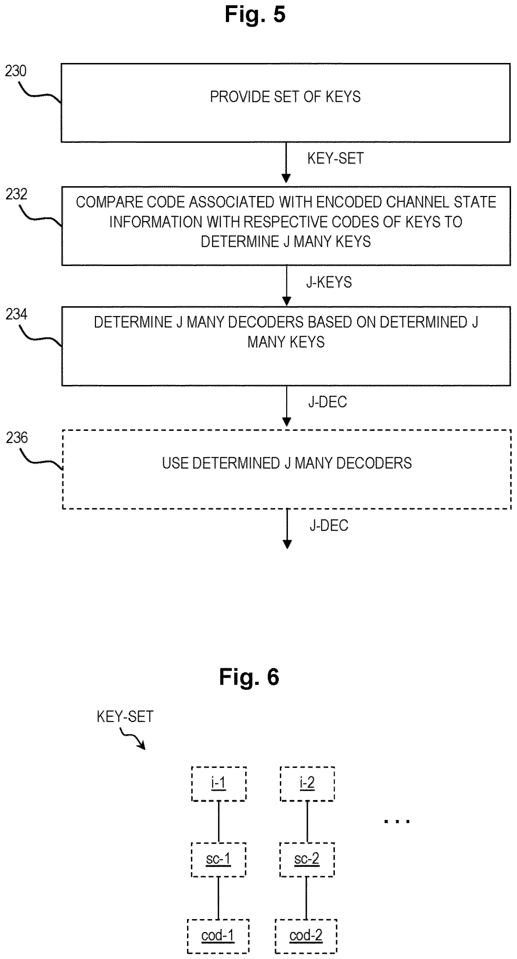

In some embodiments, Fig. 5, 6, the method comprises: providing 230 a set KEY-SET of keys i-1, i-2, ..., wherein each key i-1, i-2, ... characterizes a code cod-1, cod-2, ... of a channel state information measurement associated with a specific scenario (e.g., indoor, outdoor, and the like) sc-1, sc-2, ..., comparing 232 (Fig. 5) the code COD-CSI (Fig. 1) associated with the encoded channel state information CSI-ENC with the respective codes cod-1, cod-2, ... of the keys i-1, i-2, ... to determine J many keys J-KEYS, J >= 1, the respective codes of which are most similar to the code COD-CSI associated with the encoded channel state information CSI-ENC, determining 234 J many decoders J-DEC of the at least two different decoders DEC-1, DEC-2, ... based on the J many keys J-KEYS.

In some embodiments, the determination of the J many keys J-KEYS may e.g. use at least one of: a) a K nearest neighbors, KNN, technique, b) at least one other clustering algorithm.

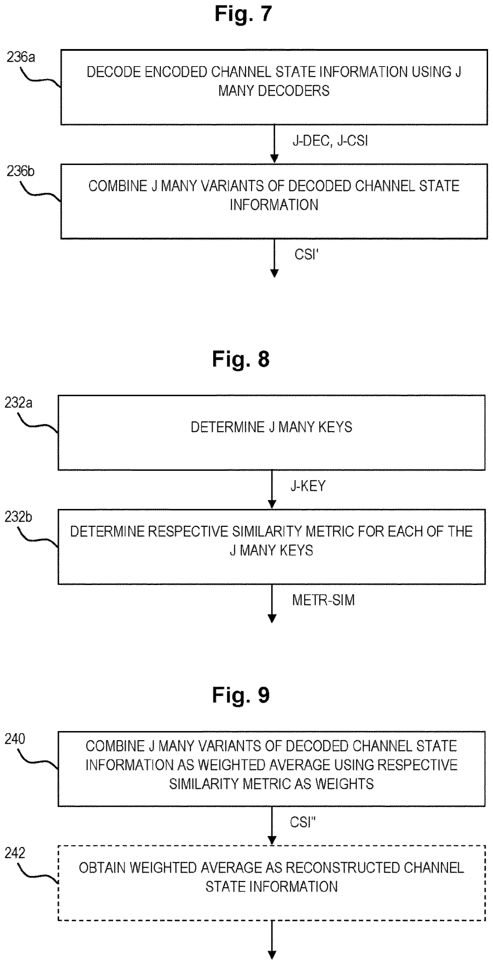

The optional block 236 of Fig. 5 symbolizes using the determined J many decoders J-DEC, e.g. for the decoding, see, for example, block 202 of Fig. 2 and Fig. 7 explained below.

In some embodiments, the method comprises: decoding 236a the encoded channel state information CSI-ENC using the J many decoders J-DEC thus obtaining J many variants J-CSI of decoded channel state information, combining 236b the J many variants J-CSI of decoded channel state information. In other words, in some embodiments, the encoded channel state information CSI-ENC is decoded with a first decoder of the J many decoders J-DEC, which yields a first variant of decoded channel state information, the encoded channel state information CSI-ENC is decoded with a second decoder of the J many decoders J-DEC, which yields a second variant of decoded channel state information, and so on. According to block 236b of Fig. 7, the J many variants J-CSI of decoded channel state information so obtained are combined, thus forming reconstructed channel state information CSI'.

In some embodiments, Fig. 7, the decoding 236a of the encoded channel state information CSI-ENC using the J many decoders J-DEC is performed simultaneously or at least in a temporally overlapping fashion.

In some embodiments, Fig. 8, the comparing 232 of the code COD-CSI associated with the encoded channel state information ENC-CSI with the respective codes cod-1, cod-2, ... (Fig. 6) of the keys i-1, i-2, ... comprises the determining 232a (Fig. 8) of the J many keys J-KEYS the respective codes of which are most similar to the code COD-CSI associated with the encoded channel state information ENC-CSI and determining 232b, for each of the J many keys J-KEYS, a respective similarity metric METR-SIM characterizing a similarity between the code COD-CSI associated with the encoded channel state information ENC-CSI and a code cod-1, cod-2, ... of the respective key i-1, i-2, ... of the J many keys J-KEYS.

As an example, in some embodiments, the similarity metric METR-SIM enables to assess a similarity of a respective code cod-1, cod-2, ... to the code COD-CSI associated with the encoded channel state information ENC-CSI. Similarly, in some embodiments, the similarity metric METR-SIM enables to compare the codes cod-1, cod-2, ... with respect to their respective similarity to the code COD-CSI associated with the encoded channel state information ENC-CSI.

In some embodiments, Fig. 9, the method comprises combining 240 the J many variants J-CSI of decoded channel state information as weighted average CSI'' of the J many variants using the respective similarity metric METR-SIM as a respective weight. In some embodiments, this way, an influence of the codes' similarity to the code COD-CSI associated with the encoded channel state information ENC-CSI can be considered. In some embodiments, a reconstructed channel state information may be obtained, see the optional block 242, by using the weighted average CSI''.

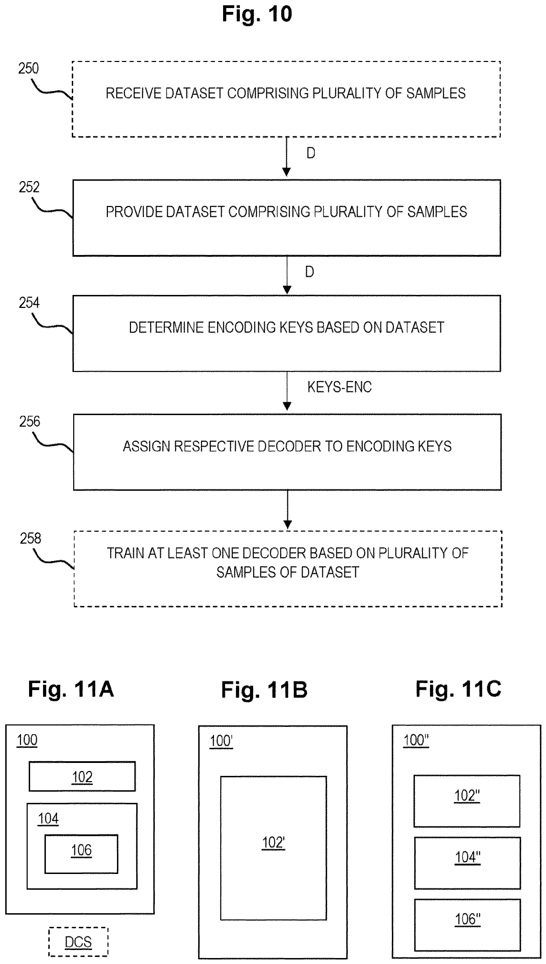

In some embodiments, Fig. 10, the method comprises: providing 252 a dataset D comprising a plurality of samples, each sample characterizing an unencoded channel state information and a respective encoded (e.g., compressed) channel state information, determining 254 encoding keys based on the dataset D, assigning 256 a respective decoder of the at least two different decoders DEC-1, DEC-2, ... to the encoding keys.

In some embodiments, as an example, a UE 20 (Fig. 1) may collect a dataset, e.g. training data set, TDS including e.g. N many samples, where each sample includes an original (e.g., un-compressed) channel state information and a corresponding encoding, e.g. a compressed version of the channel state information.

In some embodiments, the UE 20 may obtain the training dataset TDS by mixing samples from several environments/scenarios (e.g., indoor, outdoor, and the like).

In some embodiments, the UE 20 may train a trainable encoder ENC (Fig. 1), e.g. using techniques based on artificial intelligence and/or machine learning, to encode, e.g. compress, channel state information, see, for example, the encoded channel state information CSI-ENC already explained above.

In some embodiments, Fig. 1, the whole training dataset TDS or a part of the training dataset TDS of the UE 20 may be provided to a network device, e.g. to the gNB 10, and/or to a vendor VEND of the gNB 10, e.g. as the dataset D mentioned above. In some embodiments, this enables the gNB 10 to use the training dataset TDS of the UE 20, e.g. for performing aspects of the method according to the embodiments. In this context, the optional block 250 of Fig. 10 symbolizes an optional receiving of the dataset D (and/or the training dataset TDS), e.g. by the apparatus 100, 100', 100'', e.g. from at least one of: a) the gNB 10, b) the vendor VEND, c) the UE 20.

In some embodiments, Fig. 10, the method comprises training 258 at least one of the at least two different decoders DEC-1, DEC-2, ... based on the plurality of samples of the dataset D, e.g. training dataset TDS.

In some embodiments, the method comprises: extracting encoding keys based on the shared training dataset TDS, assigning a specific decoder of the at least two decoders DEC-1, DEC-2, ... to each encoding key and using the samples in the shared training dataset TDS to train the at least two decoders DEC-1, DEC-2, ....

In some embodiments, Fig. 10, for each sample in the shared training dataset TDS, the J many most similar encoding keys are identified, and the corresponding paired decoders are used in forward and backward propagations for the training 258, e.g. for a joint training, e.g. of the gNB 10 and the UE. In some embodiments, e.g. for a separate training, the encoder ENC of the UE 20 and the decoders DEC-1, DEC-2, ... may be trained separately. In some embodiments, in these approaches, each decoder DEC-1, DEC-2, ... is trained based on the samples that are in a neighborhood of the paired encoding key.

Some embodiments, Fig. 11A, relate to an apparatus 100 comprising at least one processor 102, and at least one memory 104 storing instructions 106 that, when executed by the at least one processor 102, cause the apparatus 100 to at least decode 202 (Fig. 2) encoded channel state information CSI-ENC using at least two different decoders DEC-1, DEC-2, ... and to combine 204 decoded channel state information CSI-1, CSI-2 obtained by the decoding 202 using the at least two different decoders DEC-1, DEC-2, ... to obtain combined channel state information CSI-12.

In some embodiments, the apparatus 100 may e.g. be an apparatus for a wireless communications network, e.g. according to the 5G and/or 5G Advanced and/or 6G type or of other types.

In some embodiments, the apparatus and/or its functionality may e.g. be provided for a network device, e.g. base station, e.g. gNB 10 (Fig. 1), e.g. for a cellular communications network. In some embodiments, the apparatus 100 and/or its functionality may e.g. be integrated in the network device 10.

In some embodiments, Fig. 11A, the at least one memory 104 stores instructions 106 that, when executed by the at least one processor 102, cause the apparatus 100 to perform the method according to the embodiments.

Some embodiments, Fig. 11B, relate to an apparatus 100' comprising means 102' for decoding 202 encoded channel state information using at least two different decoders and for combining 204 decoded channel state information obtained by the decoding using the at least two different decoders to obtain combined channel state information.

In some embodiments, the apparatus 100' comprises means 102' for performing the method according to the embodiments.

In some embodiments, Fig. 11B, the means 102' for decoding and/or for combining and/or for performing the method according to the embodiments may comprise at least one processor 102 (Fig. 11A), and at least one memory 104 storing instructions 106 that, when executed by the at least one processor 102, cause the apparatus 100' to perform the respective aspects, e.g. methods.

Some embodiments, Fig. 11C, relate to an apparatus 100'' comprising at least decoding circuitry 102'' configured to decode encoded channel state information using at least two different decoders and combining circuitry 104'' configured to combine decoded channel state information obtained by the decoding using the at least two different decoders to obtain combined channel state information.

In some embodiments, Fig. 11C, the apparatus 100'' comprises circuitry 106'' configured to perform aspects of the method according to the embodiments.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory/memories that work together to cause an apparatus to perform various functions) and (iii) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

Some embodiments, Fig. 1, relate to a network device 10, e.g. a base station, e.g. gNB, comprising at least one apparatus 100, 100', 100'' according to the embodiments. In some embodiments, the apparatus 100, 100', 100'' or its functionality, respectively, may be integrated in the network device 10. In some embodiments, the apparatus 100, 100', 100'' or its functionality, respectively, may be arranged outside of the network device 10.

Some embodiments, Fig. 1, relate to a communication system 1, e.g. a cellular communication system, comprising at least one of: a) an apparatus 100, 100', 100'' according to the embodiments, b) a network device 10 according to the embodiments.

Some embodiments relate to a computer program or computer program product comprising instructions 106 (Fig. 11A) which, when the program is executed by a computer, cause the computer to carry out the method according to the embodiments.

Further exemplary embodiments, Fig. 11A, relate to a data carrier signal DCS carrying and/or characterizing the instructions 106 to perform at least some aspects of the embodiments. In some embodiments, the instructions 106 may e.g. be provided in the form of at least one computer program.

In the following, further advantages and embodiments are provided which, in some embodiments, may e.g. be combined with one or more of the aforementioned aspects and embodiments.

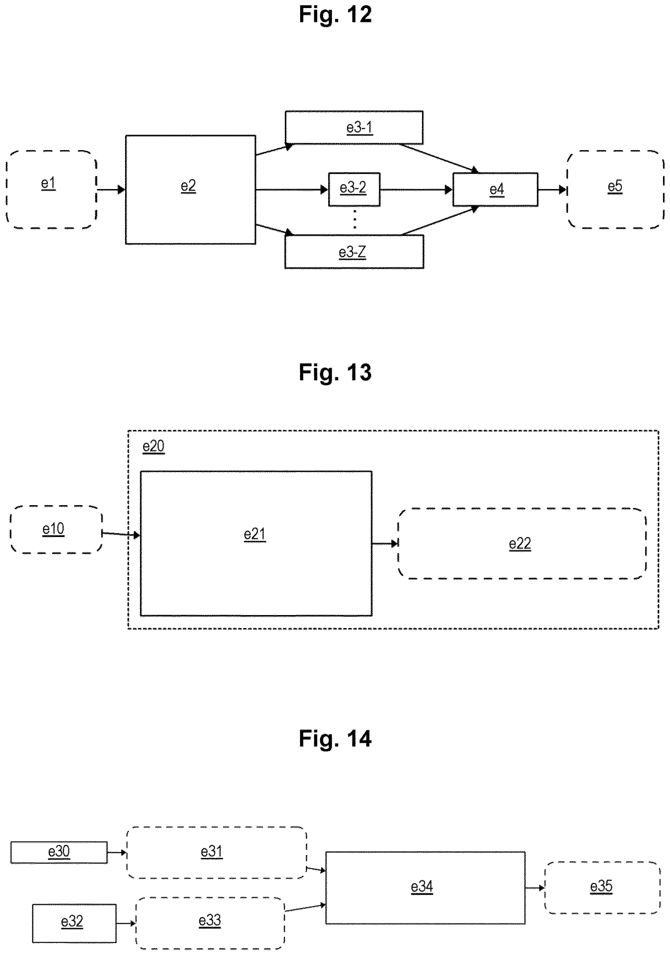

Fig. 12 schematically depicts a simplified block diagram according to some embodiments. Element e1 symbolizes a code H encoding channel state information, e.g. a CSI matrix, e.g. similar to the element ENC-CSI of Fig. 1. In some embodiments, H is generated by a UE-specific encoder ENC (Fig. 1) and may be provided by an arbitrary UE 20 to the gNB 10 or the apparatus 100, 100', 100''.

Element e2 of Fig. 12 symbolizes a process of selecting a set of keys similar to the code H from a set of keys, e.g. a set locally stored at the apparatus 100 or the gNB 10. In some embodiments, the selected keys are used to determine, e.g. activate, a specific subset of decoders from a plurality of (presently Z many) decoders e3-1, e3-2, ..., e3-Z. Element e4 symbolizes an aggregator which is configured to aggregate, e.g. combine, an output of the specific subset of decoders, whereby a reconstructed CSI matrix e5 is obtained. In some embodiments, the aggregator e4 is configured to weigh the outputs of each selected decoder of the subset of decoders based on a similarity between the code H and a respective key of the selected set of keys as determined by block e2.

In some embodiments, block e2 may also be denoted as "key matching". In some embodiments, the key matching may comprise assessing the code's H similarity to other codes stored e.g. by the gNB 10 or the apparatus 100. In some embodiments, these other codes may comprise known keys, i.e. these other codes may be associated with known channel types. In some embodiments, the key matching of element e2 may be implemented using clustering algorithms such as KNN.

In some embodiments, a hypothesis related to the principle according to some embodiments as e.g. illustrated by Fig. 12 is the following: assuming that an encoder ENC (Fig. 1) of the UE 20 for encoding channel state information has been trained over multiple scenarios and/or environments, the code H characterizes a CSI encoding, e.g. compression, that has some similarity to previously trained channel state information from different environments. In some embodiments, e.g. depending on propagation properties of e.g. a test environment, the code H has more similarity to the codes from similar environments. For example, if the UE 20 is in an indoor environment, the un-compressed and compressed versions of the channel state information are closer to the training samples from indoor environments. In some embodiments, then, the gNB 10 that possesses an ensemble of decoders DEC-1, DEC-2, ..., e.g. each trained over a particular channel model/type, may first, e.g. using block e2, determine if the code H can be approximated as a combination of known codes, and if so, it may activate the decoders that are each tailored to each code in the resulting combination of known codes.

Fig. 13 schematically depicts a simplified block diagram according to some embodiments. Element e10 symbolizes the code H, and element e20 symbolizes aspects of key matching, i.e. similar to element e2 of Fig. 12 explained above. Element e21 symbolizes finding most similar, e.g. closest, neighbours from a search space associated with a plurality of keys h1, ..., hN and determining, e.g. computing, a similarity metric, e.g. for each neighbour. Element e22 symbolizes information characterizing a predetermined number of closest neighboring keys and a similarity metric per key.

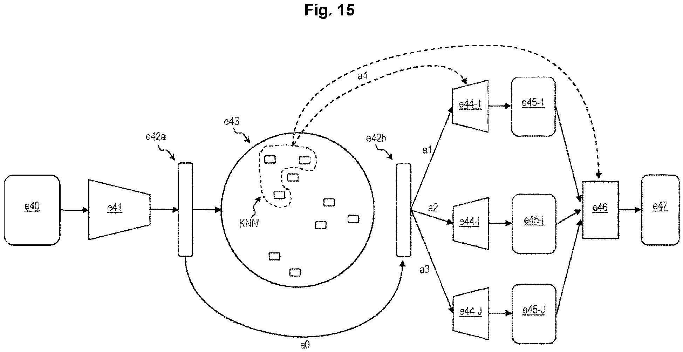

In some embodiments, the apparatus 100, 100', 100'' or the gNB 10, respectively, may store a key set, e.g. a UE-specific key set, e.g. in a memory (see, for example, also the element e43 of Fig. 15), where a key *iⱼ* characterizes or is a code of a CSI measurement collected in scenario j. In some embodiments, the apparatus 100, 100', 100'' (and/or the gNB 10) compares the received code H (e.g., the encoded channel state information CSI-ENC), see element e10 of Fig. 13, with each key in the memory e43 (Fig. 15) and lists the first J many keys (e.g., neighbors) closest (i.e., most similar) to the code H. Note that in some embodiments, this procedure is similar to aspects of the embodiments explained above with respect to Fig. 8, 9, 10, see, for example the J many keys J-KEYS.

In some embodiments, e.g. to obtain the list of keys or neighbors, a KNN search, or any other clustering method, may be implemented.

In some embodiments, the similarity metric METR-SIM used to find the closest neighbors may be the cosine similarity, MSE (mean squared error), etc. As mentioned above, in some embodiments, the key matching e20 (Fig. 13) returns the closest neighbors, e.g. closest neighboring keys, (e.g., J many closest neighboring keys) and the similarity metric to each of the neighbors.

In some embodiments, each key j returned by block e20 of Fig. 13 activates a decoder j (i.e., one of J many decoders) which takes as input code H (e.g., the encoded channel state information) and reconstructs the corresponding CSI by decoding, e.g. according to the properties, e.g. type of training, of the respective decoder. Hence, in some embodiments, multiple, e.g. specialized (e.g., regarding training, e.g. for a specific scenario), decoders are, for example simultaneously, activated, e.g. to decode H and reconstruct the original CSI. Each decoder j provides at its output its reconstructed CSI(j).

Fig. 14 schematically depicts a simplified block diagram according to some embodiments, depicting aspects of an aggregation of the reconstructed CSI(j) of the decoders j. Element e30 of Fig. 14 symbolizes a key matching, i.e. similar or identical to element e20 of Fig. 13. Element e31 of Fig. 14 symbolizes a similarity metric per key, e.g. s(1), ..., s(J), wherein s(1) characterizes a value of the similarity metric for a first key, and wherein s(J) characterizes a value of the similarity metric for a J-th key. Element e32 symbolizes a set of activated decoders, e.g. the J many activated decoders. Element e33 symbolizes the reconstructed CSI as obtained by the J many activated decoders. Element e34 symbolizes an aggregation of the reconstructed CSI as obtained by the J many activated decoders based on the values e31 of the similarity metric per key.

In some embodiments, the aggregation e34 may combines the outputs of all J many activated decoders, by e.g. accounting for how similar the code H is to each of the keys that unlocked the J many decoders. For example, the aggregation e34 can comprise determining a weighted average of all J outputs e33, where the weight of j-th decoder is given by the similarity metric between the code H and the key that unlocked the j-th decoder. Element e35 symbolizes a so reconstructed channel state information.

Fig. 15 schematically depicts a simplified block diagram according to some embodiments, depicting aspects of an architecture using the principle according to the embodiments. Element e40 symbolizes channel state information, as e.g. available at a UE 20 (Fig. 1). Element e41 symbolizes an encoder used by the UE 20 to encode, e.g. compress, the channel state information e40, which results in a code H, also see element e42a, which symbolizes the encoded channel state information at the UE side. Element e42b of Fig. 15 symbolizes the encoded channel state information at a receiver side, e.g. gNB side, e.g. after transmission a0 of the encoded channel state information e42a to the gNB in a per se known manner. The elements e44-1, e44-j, e44-J symbolize a first, j-th and J-th decoder, respectively, which may e.g. be activated by a KNN search based on the code H, see the arrows a1, a2, a3 and dashed arrows a4 and the exemplarily depicted K nearest neighbours KNN'. Elements e45-1, e45-j, e45-J symbolize reconstructed, e.g. decoded, channel state information as obtained at respective outputs of the decoders e44-1, e44-j, e44-J. Element e46 symbolizes an aggregation of the reconstructed, e.g. decoded, channel state information e45-1, e45-j, e45-J, e.g. in the sense of a weighted average, wherein a similarity between a j-th key and the code H is used to weigh the j-th decoder's output for the aggregation e46. Element e47 symbolizes the reconstructed channel state information as obtained by the aggregation e46.

In the following further aspects and advantages of some embodiments are disclosed.

In some embodiments, the principle according to the embodiments enables to provide a robust decoder architecture, see, for example, Fig. 15, capable of coping with mismatches between training conditions at an encoder ENC (Fig. 1) vs. the training conditions in the decoder(s) DEC-1, DEC-2, ....

In some embodiments, the principle according to the embodiments enables to mitigate forgetting, e.g. catastrophic forgetting, e.g. when continual learning is enabled, since it avoids retuning all decoders in an ensemble. In some embodiments, specifically, when a new key is added to the memory e43 (Fig. 15), a specialized decoder associated with that key may be added, e.g. without modifying the existing decoders.

In some embodiments, the proposed scheme does not need fine-tuning datasets D, TDS, e.g. to adapt to a test scenario. In some embodiments, an adaptation to a test scenario is done automatically using the closeness of the encoding vector of the test sample to the obtained key encodings.

In some embodiments, the principle according to the embodiments enables to generalize over multiple scenarios any given UE encoder ENC may have been trained, which, in some embodiments, enables to train the decoders DEC-1, DEC-2, ... according to the embodiments to cope with an encoder ENC that has been trained with scenario-mismatched data.

## Claims

1. A method of reconstructing channel state information, comprising: decoding (202) encoded channel state information (CSI-ENC) using at least two different decoders (DEC-1, DEC-2, ...), combining (204) decoded channel state information obtained by the decoding (202) using the at least two different decoders (DEC-1, DEC-2) to obtain combined channel state information (CSI-12).

2. The method according to claim 1, wherein the at least two different decoders (DEC-1, DEC-2, ...) are configured to decode encoded channel state information associated with at least one of a) a different channel model (CM-1, CM-2) and/or b) a different channel type (CT-1, CT-2).

3. The method according to at least one of the preceding claims, comprising at least one of: a) receiving (200) the encoded channel state information (CSI-ENC), b) using the combined channel state information (CSI-12).

4. The method according to any of the preceding claims, comprising: determining (210) the at least two different decoders (DEC-1, DEC-2, ...) based on the encoded channel state information (CSI-ENC) and based on at least one of: a) a respective channel model (CM-1) associated with at least one decoder (DEC-1) of the at least two different decoders (DEC-1, DEC-2, ...), b) a respective channel type (CT-1) associated with at least one decoder (DEC-1) of the at least two different decoders (DEC-1, DEC-2, ...).

5. The method according to any of the preceding claims, comprising: determining (220) a similarity (SIM-COD-CSI) between a code (COD-CSI) associated with the encoded channel state information (CSI-ENC) and a respective code associated with at least one of the at least two different decoders (DEC-1, DEC-2, ...), determining (222) the at least two different decoders (DEC-1, DEC-2, ...) based on the determined similarity (SIM-COD-CSI).

6. The method according to any of the preceding claims, comprising: providing (230) a set (KEY-SET) of keys (i-1, i-2, ...), wherein each key characterizes a code (cod-1, cod-2, ...) of a channel state information measurement associated with a specific scenario (sc-1, sc-2, ...), comparing (232) a or the code (COD-CSI) associated with the encoded channel state information (CSI-ENC) with the respective codes of the keys (i-1, i-2, ...) to determine J many keys (J-KEYS), J >= 1, the respective codes of which are most similar to the code (COD-CSI) associated with the encoded channel state information (CSI-ENC), determining (234) J many decoders (J-DEC) of the at least two different decoders (DEC-1, DEC-2, ...) based on the J many keys (J-KEYS).

7. The method according to claim 6, comprising: decoding (236a) the encoded channel state information (CSI-ENC) using the J many decoders (J-DEC) thus obtaining J many variants (CSI-J) of decoded channel state information, combining (236b) the J many variants (CSI-J) of decoded channel state information.

8. The method according to claim 7, wherein the decoding (236a) of the encoded channel state information (CSI-ENC) using the J many decoders (J-DEC) is performed simultaneously or at least in a temporally overlapping fashion.

9. The method according to at least one of the claims 6 to 8, wherein the comparing (232) comprises the determining (232a) of the J many keys (J-KEYS) the respective codes of which are most similar to the code (COD-CSI) associated with the encoded channel state information (CSI-ENC) and determining (232b), for each of the J many keys (J-KEYS), a respective similarity metric (METR-SIM) characterizing a similarity between the code (COD-CSI) associated with the encoded channel state information (CSI-ENC) and a code of the respective key of the J many keys (J-KEYS).

10. The method according to claim 9, referring back at least to claim 7, comprising: combining (240) the J many variants (CSI-J) of decoded channel state information as weighted average of the J many variants (CSI-J) using the respective similarity metric (METR-SIM) as a respective weight.

11. The method according to any of the preceding claims, comprising: providing (252) a dataset (D) comprising a plurality of samples, each sample characterizing an unencoded channel state information and a respective encoded channel state information, determining (254) encoding keys (KEYS-ENC) based on the dataset (D), assigning (256) a respective decoder of the at least two different decoders (DEC-1, DEC-2, ...) to the encoding keys.

12. The method according to claim 11, comprising training (258) at least one of the at least two different decoders (DEC-1, DEC-2, ...) based on the plurality of samples of the dataset (D).

13. An apparatus (100) comprising at least one processor (102), and at least one memory (104) storing instructions (106) that, when executed by the at least one processor (102), cause the apparatus (100) to at least decode (202) encoded channel state information (CSI-ENC) using at least two different decoders (DEC-1, DEC-2, ...) and to combine (204) decoded channel state information obtained by the decoding (202) using the at least two different decoders (DEC-1, DEC-2) to obtain combined channel state information (CSI-12).

14. An apparatus (100') comprising means (102') for decoding (202) encoded channel state information (CSI-ENC) using at least two different decoders (DEC-1, DEC-2, ...) and for combining (204) decoded channel state information obtained by the decoding (202) using the at least two different decoders (DEC-1, DEC-2) to obtain combined channel state information (CSI-12).

15. A network device (10) comprising at least one apparatus (100; 100') according to one of the claims 13 to 14.

16. A communication system (1) comprising at least one of: a) an apparatus (100; 100') according to one of the claims 13 to 14, b) a network device (10) according to claim 15.
